# EUROPÄISCHE PATENTSCHRIFT

(11) **EP 3 556 213 B1**
(45) Veröffentlichungstag und Bekanntmachung des Hinweises auf die Patenterteilung: **22.04.2020**
(21) Anmeldenummer: 19168636.9
(22) Anmeldetag: 11.04.2019
(51) Int. Cl.: A01N 59/16, F02M 25/025, F02M 25/022, A01N 59/20

(54) **FLÜSSIGKEITSTANK MIT EINEM ANTIMIKROBIELLEN WIRKSTOFF**
LIQUID TANK WITH AN ANTIMICROBIAL ACTIVE AGENT
RÉSERVOIR DE LIQUIDE AVEC UN AGENT ANTIMICROBIEN

(30) Priorität: 20.04.2018 DE 102018109522
(43) Veröffentlichungstag der Anmeldung: 23.10.2019
(73) Patentinhaber: VERITAS AG, 63571 Gelnhausen (DE)
(72) Erfinder: VAN HOOREN, Marc, 63579 Freigericht (DE); ROSEMANN, Michael, 63594 Hasselroth (DE); NETZER, Heribert, 63457 Hanau (DE)
(74) Vertreter: Patentship Patentanwaltsgesellschaft mbH

(56) Entgegenhaltungen:
- WO-A1-2008/121279
- WO-A1-2018/050394
- WO-A1-2018/050895
- WO-A1-2019/008058
- WO-A2-2008/046513

## Beschreibung

Die vorliegende Erfindung betrifft einen Flüssigkeitstank mit einem antimikrobiellen Wirkstoff. Die vorliegende Erfindung betrifft insbesondere einen Flüssigkeitstank zur Aufnahme von Flüssigkeit in einem Kraftfahrzeug mit einer aus Kunststoff geformten Flüssigkeitstankschale mit einem antimikrobiellen Wirkstoff.

Herkömmliche Kraftfahrzeuge weisen oftmals ein Wassereinspritzsystem auf, welches ausgebildet ist, Wasser, insbesondere destilliertes Wasser, in den Ansaugtrakt eines Verbrennungsmotors einzuspritzen, um eine Leistungssteigerung des Verbrennungsmotors zu bewirken. Um das einzuspritzende Wasser zu speichern, weisen derartige Wassereinspritzsysteme Wassertanks auf. In herkömmlichen Wassertanks von Wassereinspritzsystemen tritt oftmals das Problem auf, dass sich ein Biofilm in dem in den Wassertanks aufgenommenen Wasser bilden kann. Ein derartiger Biofilm wird durch Mikroorganismen, wie z.B. Bakterien, Algen, Pilzen oder Protozoen, in dem Wasser gebildet, und beeinträchtigt die Qualität des Wassers, wodurch unter Umständen Probleme beim Einspritzen von entsprechend verunreinigtem Wasser in den Verbrennungsmotor auftreten können.

Die Druckschrift EP 2 077 976 B1 beschreibt eine bioaktive Ruthenium-haltige Beschichtung. Die Druckschrift WO 2018/050895 A1 beschreibt einen Tank zum Speichern von entsalztem Wasser in einem Fahrzeug. Die Druckschrift WO 2018/050394 A1 beschreibt eine Wassereinspritzvorrichtung für eine Brennkraftmaschine eines Kraftfahrzeuges. Die Druckschrift WO 2008/121279 A1 beschreibt farbstabilisierte antimikrobielle Kunststoff-Komposite.

Es ist die der Erfindung zugrundeliegende Aufgabe, einen Flüssigkeitstank eines Kraftfahrzeugs bereitzustellen, wobei die Bildung von Biofilm in der in dem Flüssigkeitstank aufgenommenen Flüssigkeit beeinträchtigt ist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Flüssigkeitstank zur Aufnahme von Flüssigkeit in einem Kraftfahrzeug gelöst, mit einer Flüssigkeitstankschale, welche einen Innenraum des Flüssigkeitstanks zur Aufnahme von Flüssigkeit umschließt, wobei die Flüssigkeitstankschale aus einem Kunststoff geformt ist, wobei innerhalb des Kunststoffs ein antimikrobieller Wirkstoff eingebettet ist, wobei der Kunststoff durch den antimikrobiellen Wirkstoff durchdringbar ist, und wobei der Kunststoff ausgebildet ist, den eingebetteten antimikrobiellen Wirkstoff an eine Flüssigkeit in dem Innenraum des Flüssigkeitstanks durch Diffusion abzugeben.

Der Flüssigkeitstank ist insbesondere als ein Wassertank zur Aufnahme von Wasser, insbesondere von destilliertem Wasser, ausgebildet. Der Flüssigkeitstank ist insbesondere als ein Fahrzeugflüssigkeitstank ausgebildet, welcher in einem Kraftfahrzeug angeordnet ist, und welcher insbesondere in einem Wassereinspritzsystem eines Kraftfahrzeugs angeordnet ist.

Der an die Flüssigkeit abgegebene antimikrobielle Wirkstoff beeinträchtigt die Vermehrungsfähigkeit von Mikroorganismen, wie z.B. Bakterien, Algen, Pilzen oder Protozoen, bzw. tötet die Mikroorganismen ab oder inaktiviert diese. Dadurch wird die Bildung eines von Mikroorganismen verursachten Biofilms verhindert, bzw. die Menge des gebildeten Biofilms reduziert, und eine Verunreinigung der in dem Flüssigkeitstank gespeicherten Flüssigkeit kann verhindert werden.

Durch das auf Diffusion basierende Abgeben des antimikrobiellen Wirkstoffs an die Flüssigkeit in dem Flüssigkeitstank werden nicht nur an der Flüssigkeitstankschale haftende Mikroorganismen beeinträchtigt, sondern es werden auch in der Flüssigkeit bewegliche Mikroorganismen beeinträchtigt, wodurch das Auftreten eines Biofilms in dem Flüssigkeitstank besonders effektiv verhindert werden kann.

Der Kunststoff der Flüssigkeitstankschale weist hierbei insbesondere kleine Poren und/oder molekulare Zwischenräume auf, durch welche der in dem Kunststoff eingebettete antimikrobielle Wirkstoff, im Rahmen eines Diffusionsvorgangs dringen kann, so dass der Kunststoff durch den antimikrobiellen Wirkstoff durchdringbar ist.

Der durchdringbare Kunststoff stellt hierbei sicher, dass der eingebettete antimikrobielle Wirkstoff, insbesondere langsam, aus dem Kunststoff in die Flüssigkeit des Flüssigkeitstanks diffundiert, so dass durch einen andauernden Diffusionsvorgang eine ausreichend wirksame Konzentration des antimikrobiellen Wirkstoffs in der Flüssigkeit aufrechterhalten werden kann, so dass in der Flüssigkeit vorhandene Mikroorganismen wirksam beeinträchtigt werden können.

Die Flüssigkeitstankschale kann insbesondere aus einem einzigen Kunststoff oder aus einer Mehrzahl von Kunststoffen geformt sein. Der antimikrobielle Wirkstoff kann insbesondere einen einzigen antimikrobiellen Wirkstoff oder eine Mehrzahl von antimikrobiellen Wirkstoffen umfassen.

Insbesondere kann der zumindest eine antimikrobielle Wirkstoff zumindest einen Hilfsstoff umfassen, z.B. um Diffusionseigenschaften des antimikrobiellen Wirkstoffs zu unterstützen und/oder um die Wirksamkeit des antimikrobiellen Wirkstoffs zu verbessern. Der Hilfsstoff kann insbesondere ein Vitamin, wie z.B. Ascorbinsäure, ein Antioxidans, wie z.B. ein Carotinoid, einen Puffer, wie z.B. Tris(hydroxymethyl)-aminomethan, oder eine biologisch aktive Substanz, wie z.B. ein Enzym und/oder ein Coenzym, umfassen.

In einer vorteilhaften Ausführungsform ist der antimikrobielle Wirkstoff in die gesamte aus Kunststoff geformte Flüssigkeitstankschale eingebettet, oder ist der antimikrobielle Wirkstoff in einem Bereich der aus Kunststoff geformten Flüssigkeitstankschale eingebettet, wobei der Bereich insbesondere eine dem Innenraum des Flüssigkeitstanks zugewandte Innenseite der Flüssigkeitstankschale umfasst.

Dadurch wird beispielsweise der technische Vorteil erreicht, dass wenn der antimikrobielle Wirkstoff in der gesamten aus Kunststoff geformten Flüssigkeitstankschale eingebettet ist, eine einfache Herstellbarkeit der Flüssigkeitstankschale gewährleistet wird. Der antimikrobielle Wirkstoff kann alternativ auch nur in einem Bereich der aus Kunststoff geformten Flüssigkeitstankschale eingebettet sein, wodurch der antimikrobielle Wirkstoff gezielt in dem Bereich oder in den Bereichen der Flüssigkeitstankschale angeordnet werden kann, in welchem oder in welchen mit einem Auftreten von Biofilm unter Umständen zu rechnen ist, wie z.B. an der mit Flüssigkeit benetzten Innenseite der Flüssigkeitstankschale.

In einer vorteilhaften Ausführungsform ist der Kunststoff ausgebildet, den eingebetteten antimikrobiellen Wirkstoff über einen Zeitraum kontinuierlich an die Flüssigkeit in dem Innenraum abzugeben.

Dadurch wird beispielsweise der technische Vorteil erreicht, dass durch die kontinuierliche Abgabe sichergestellt werden kann, dass stets eine geringe zum Beeinträchtigen der Mikroorganismen ausreichende Konzentration des antimikrobiellen Wirkstoffs in der Flüssigkeit vorhanden ist. Zudem kann durch die kontinuierliche Abgabe des antimikrobiellen Wirkstoffs eine zu schnelle Abgabe des antimikrobiellen Wirkstoffs an die Flüssigkeit verhindert werden, so dass ein zu schneller Verbrauch des antimikrobiellen Wirkstoffs in dem Kunststoff verhindert werden kann. Die kontinuierliche Abgabe des antimikrobiellen Wirkstoffs durch den Kunststoff wird insbesondere durch eine vorteilhafte Ausbildung von Poren und/oder molekularen Zwischenräumen des Kunststoffs sichergestellt.

Insbesondere weist der Kunststoff hierbei ein Wirkstoffdepot auf, in welchem der eingebettete antimikrobielle Wirkstoff aufgenommen ist. Das Wirkstoffdepot stellt hierbei insbesondere eine langanhaltende kontinuierliche Abgabe des antimikrobiellen Wirkstoffs an die Flüssigkeit sicher, so dass die Bildung eines Biofilms in dem Flüssigkeitstank für einen langen Zeitraum, insbesondere für den Betriebszeitraum des Flüssigkeitstanks, verhindert werden kann.

In einer vorteilhaften Ausführungsform umfasst der antimikrobielle Wirkstoff einen Feststoff, insbesondere einen metallischen Feststoff oder einen Metallatome, Metallmoleküle und/oder Metallionen enthaltenden Feststoff.

Dadurch wird beispielsweise der technische Vorteil erreicht, dass eine Vielzahl von Mikroorganismen, wie z.B. Bakterien, Algen, Pilzen, Protozoen, durch Metallatome, Metallmoleküle und/oder Metallionen negativ beeinträchtigt werden, so dass durch den metallischen Feststoff, bzw. den Metallatome, Metallmoleküle und/oder Metallionen enthaltenden Feststoff, Mikroorganismen wirksam beeinträchtigt werden können.

In einer vorteilhaften Ausführungsform umfasst der antimikrobielle Wirkstoff einen anorganischen Feststoff, wobei der anorganische Feststoff insbesondere ausgebildet ist, einer Temperatur von mehr als 200 °C, insbesondere von mehr als 300 °C, zu widerstehen.

Dadurch wird beispielsweise der technische Vorteil erreicht, dass ein anorganischer Feststoff eine hohe Stabilität aufweist. Insbesondere ist ein anorganischer Feststoff im Sinne der vorliegenden Offenbarung dadurch gekennzeichnet, dass der anorganische Feststoff keinen Kohlenstoff aufweist. Der anorganische Feststoff kann insbesondere einer Temperatur von mehr als 200 °C, insbesondere von mehr als 300 °C, widerstehen, wodurch der antimikrobielle Wirkstoff bei den erhöhten Herstellungstemperaturen während des Verfahrens, insbesondere eines Spritzgussverfahrens, zur Herstellung des Flüssigkeitstanks nicht zersetzt wird, so dass die antimikrobielle Aktivität des antimikrobiellen Wirkstoffs in der Flüssigkeit gewährleistet bleibt.

In einer vorteilhaften Ausführungsform umfasst der antimikrobielle Wirkstoff zumindest eines der folgenden Metalle, Silber, Zink, Osmium, Gold, Ruthenium und Kupfer, und/oder umfasst der antimikrobielle Wirkstoff zumindest eine der folgenden Verbindungen, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel.

Dadurch wird beispielsweise der technische Vorteil erreicht, dass die genannten Metalle, bzw. Metallverbindungen, eine hohe antimikrobielle Wirksamkeit des antimikrobiellen Wirkstoffs sicherstellen. Hierbei weisen Silber-, Kupfer-, und/oder Zink-Nanopartikel insbesondere einen Durchmesser von weniger als 1 µm auf, insbesondere von weniger als 100 nm, insbesondere von weniger als 50 nm, und insbesondere von weniger als 20 nm auf.

In einer vorteilhaften Ausführungsform ist der antimikrobielle Wirkstoff in einem Trägermaterial eingebettet, wobei das Trägermaterial mit dem antimikrobiellen Wirkstoff innerhalb des Kunststoffs eingebettet ist, wobei das Trägermaterial ausgebildet ist, den in dem Trägermaterial eingebetteten antimikrobiellen Wirkstoff an den Kunststoff abzugeben, wobei der Kunststoff ausgebildet ist, den antimikrobiellen Wirkstoff an die Flüssigkeit in dem Innenraum des Flüssigkeitstanks durch Diffusion abzugeben, und wobei das Trägermaterial insbesondere zumindest eines der folgenden Materialen umfasst, Glas, Molekularsiebe, Zeolithe, und/oder Alumosilicate.

Dadurch wird beispielsweise der technische Vorteil erreicht, dass durch das Trägermaterial, in welchem der antimikrobielle Wirkstoff eingebettet ist, eine wirksame kontrollierte Freisetzung des antimikrobiellen Wirkstoffs sichergestellt werden kann. Durch die kontrollierte Freisetzung kann eine wirksame Depotwirkung durch das Trägermaterial sichergestellt werden, da verhindert wird, dass der antimikrobielle Wirkstoff sofort in großen Mengen freigesetzt wird und somit eine langanhaltende Freisetzung des antimikrobiellen Wirkstoff sichergestellt wird, wodurch eine wirksame Konzentration des antimikrobiellen Wirkstoffs in der Flüssigkeit während eines längeren Zeitraums sichergestellt wird.

Insbesondere umfasst das Trägermaterial zumindest eine Vielzahl von Poren, in welchen der antimikrobielle Wirkstoff eingebettet ist, so dass durch das Einbetten des antimikrobiellen Wirkstoffs in dem Trägermaterial die Geschwindigkeit der Freisetzung, bzw. Diffusion, des antimikrobiellen Wirkstoff aus dem Trägermaterial wirksam begrenzt werden kann. Derartige poröse Materialien können insbesondere Molekularsiebe, Glas, insbesondere poröses Glas, Zeolithe und/oder Alumosilicate umfassen. Insbesondere kann der antimikrobielle Wirkstoff auch an der Oberfläche des Trägermaterials eingebettet sein, um eine wirksam kontrollierte Freisetzung des antimikrobiellen Wirkstoffs sicherzustellen.

In einer vorteilhaften Ausführungsform umfasst der Kunststoff der Flüssigkeitstankschale zumindest einen der folgenden Kunststoffe, Polyolefin, insbesondere Polyethylen, hochdichtes Polyethylen (HDPE), oder Polypropylen, oder Polyamid. Insbesondere umfasst der Kunststoff der Flüssigkeitstankschale Rußpartikel.

Dadurch wird beispielsweise der technische Vorteil erreicht, dass die genannten Kunststoffe eine wirksame Einbettung des antimikrobiellen Wirkstoffs sicherstellen, und/oder dass die Rußpartikel vorteilhafte Eigenschaften der Flüssigkeitstankschale sicherstellen.

In einer vorteilhaften Ausführungsform ist die Flüssigkeitstankschale als ein Spritzgussbauteil ausgebildet ist.

Dadurch wird beispielsweise der technische Vorteil erreicht, dass ein als Spritzgussbauteil hergestellter Flüssigkeitstank einfach und kostengünstig, insbesondere in der Form flexibel, herstellbar ist.

In einer vorteilhaften Ausführungsform umfasst die Flüssigkeitstankschale eine erste Tankhalbschale und eine zweite Tankhalbschale, welche miteinander stoffschlüssig verbunden, insbesondere verschweißt, sind.

Dadurch wird beispielsweise der technische Vorteil erreicht, dass durch die beiden miteinander stoffschlüssig verbundenen Flüssigkeitstankschalen ein vorteilhaft ausgebildeter Flüssigkeitstank geformt werden kann.

In einer vorteilhaften Ausführungsform weist die erste Tankhalbschale ein erstes Befestigungselement, insbesondere Befestigungsdom, auf, welches sich in den Innenraum des Flüssigkeitstanks erstreckt und weist die zweite Tankhalbschale ein zweites Befestigungselement, insbesondere Befestigungsdom, auf, welches sich in den Innenraum des Flüssigkeitstanks erstreckt, wobei das erste Befestigungselement und das zweite Befestigungselement miteinander verbunden sind.

Dadurch wird beispielsweise der technische Vorteil erreicht, dass durch die beiden miteinander verbundenen Befestigungselemente eine besonders hohe Stabilität des Flüssigkeitstanks sichergestellt werden kann. Hierbei weisen die ersten und/oder zweiten Befestigungselemente insbesondere jeweils eine Kontaktfläche auf, welche miteinander verbunden, insbesondere verschweißt sind. Hierbei kann insbesondere eine Mehrzahl von ersten und/oder zweiten Befestigungselementen in der ersten und/oder zweiten Tankhalbschale angeordnet sein.

In einer vorteilhaften Ausführungsform sind an der ersten Tankhalbschale eine Mehrzahl von ersten Verstärkungsrippen angeordnet, welche mit dem ersten Befestigungselement verbunden sind, und/oder sind an der zweiten Tankhalbschale eine Mehrzahl von zweiten Verstärkungsrippen angeordnet, welche mit dem zweiten Befestigungselement verbunden sind.

Dadurch wird beispielsweise der technische Vorteil erreicht, dass durch die Verstärkungsrippen, eine wirksame Stabilisierung der an der ersten und/oder zweiten Tankhalbschale angeordneten ersten und/oder zweiten Befestigungselemente sichergestellt werden kann.

In einer vorteilhaften Ausführungsform weist die Flüssigkeitstankschale eine Zuführöffnung auf, wobei die Zuführöffnung mit einer Zuführleitung zum Zuführen von Flüssigkeit in den Innenraum des Flüssigkeitstanks fluidtechnisch verbindbar ist, und/oder weist die Flüssigkeitstankschale eine Entlüftungsöffnung auf, wobei die Entlüftungsöffnung mit einer Entlüftungsleitung zum Entlüften des Innenraums des Flüssigkeitstanks fluidtechnisch verbindbar ist, und/oder weist die Flüssigkeitstankschale eine Abführöffnung aufweist, wobei die Abführöffnung mit einer Abführleitung zum Abführen von Flüssigkeit aus dem Innenraum des Flüssigkeitstanks fluidtechnisch verbindbar ist.

Dadurch wird beispielsweise der technische Vorteil erreicht, dass durch die Zuführöffnung wirksam Flüssigkeit dem Flüssigkeitstank zugeführt werden kann, dass durch die Abführöffnung wirksam Flüssigkeit aus dem Flüssigkeitstank abgeführt werden kann, und dass durch die Entlüftungsöffnung ein Druckausgleich beim Zuführen oder Abführen von Flüssigkeit sichergestellt werden kann. Insbesondere ist die Zuführöffnung und/oder die Entlüftungsöffnung an der zweiten, insbesondere oberen, Tankhalbschale angeordnet. Insbesondere ist die Abführöffnung an der ersten, insbesondere unteren, Tankhalbschale angeordnet. Insbesondere weist der Flüssigkeitstank einen Abführstutzen mit der Abführöffnung zum Aufstecken der Abführleitung auf. Insbesondere weist der Flüssigkeitstank einen Zuführstutzen mit der Zuführöffnung zum Aufstecken der Zuführleitung auf. Insbesondere weist der Flüssigkeitstank einen Entlüftungsstutzen mit der Entlüftungsöffnung zum Aufstecken der Entlüftungsleitung auf.

In einer vorteilhaften Ausführungsform ist in dem Innenraum des Flüssigkeitstanks ein Heizkörper angeordnet, welcher ausgebildet ist, die Flüssigkeit in dem Flüssigkeitstank zu erwärmen, und/oder ist in dem Innenraum des Flüssigkeitstanks ein Pumpenmodul zum Abpumpen von Flüssigkeit aus dem Flüssigkeitstank angeordnet.

Dadurch wird beispielsweise der technische Vorteil erreicht, dass durch das Pumpenmodul ein wirksames Abpumpen von Flüssigkeit aus dem Flüssigkeitstank sichergestellt werden kann, und dass durch den Heizkörper die Flüssigkeit in dem Flüssigkeitstank auf einer vorteilhaften Temperatur gehalten werden kann, wodurch z.B. ein Einfrieren von Wasser in einem Wassertank bei niedrigen Temperaturen verhindert werden kann. Der Heizkörper umfasst insbesondere ein elektrisches Heizelement zum Erwärmen des Heizkörpers, wobei das elektrische Heizelement insbesondere ein elektrisches Widerstandsheizelement, einen PTC-Körper oder eine PTC-Folie umfasst.

In einer vorteilhaften Ausführungsform ist der Flüssigkeitstank als ein Fahrzeugflüssigkeitstank ausgebildet, welcher in einem Kraftfahrzeug angeordnet ist, und welcher insbesondere in einem Wassereinspritzsystem eines Kraftfahrzeugs angeordnet ist.

Dadurch wird beispielsweise der technische Vorteil erreicht, dass durch den als Fahrzeugflüssigkeitstank, insbesondere Wassertank, ausgebildeten Flüssigkeitstank des Kraftfahrzeugs eine konstante Flüssigkeitszufuhr, insbesondere Wasserzufuhr, zu dem Verbraucher in dem Kraftfahrzeug, insbesondere Wassereinspritzsystem des Kraftfahrzeugs, sichergestellt werden kann.

In einer vorteilhaften Ausführungsform ist in dem Innenraum des Flüssigkeitstanks zumindest eine Schwallwand angeordnet, wobei die Schallwand ausgebildet ist, eine Flüssigkeitsbewegung der Flüssigkeit in dem Flüssigkeitstank zu hemmen.

Dadurch wird beispielsweise der technische Vorteil erreicht, dass durch starke Beschleunigungs- oder Abbremsbewegungen des Kraftfahrzeugs verursachte Flüssigkeitsbewegungen, welche sich negativ auf die Fahrstabilität auswirken können, durch die Schwallwand gehemmt werden.

In einer vorteilhaften Ausführungsform weist der Flüssigkeitstank eine Trennwand auf, welche mit der Flüssigkeitstankschale verbunden ist, und den Innenraum des Flüssigkeitstanks in einen ersten Innenraumbereich und in einen zweiten Innenraumbereich unterteilt.

Dadurch wird beispielsweise der technische Vorteil erreicht, dass durch die Trennwand eine wirksam Separierung des Innenraums des Flüssigkeitstanks in einzelne Segmente ermöglicht wird. Hierbei können die jeweiligen Innenraumbereiche miteinander fluidtechnisch verbunden sein oder voneinander fluidtechnisch getrennt sein.

Gemäß einem zweiten Aspekt der Erfindung wird die Aufgabe durch eine Tankanordnung mit einem Flüssigkeitstank nach dem ersten Aspekt gelöst, einer mit dem Flüssigkeitstank fluidtechnisch verbundenen Abführleitung zum Abführen von Flüssigkeit aus dem Innenraum des Flüssigkeitstanks, und einer mit dem Flüssigkeitstank fluidtechnisch verbundenen Zuführleitung zum Zuführen von Flüssigkeit in den Innenraum des Flüssigkeitstanks.

Dadurch wird beispielsweise der technische Vorteil erreicht, dass durch die Tankanordnung umfassend den Flüssigkeitstank, die Abführleitung und die Zuführleitung, eine wirksame Zuführung von Flüssigkeit in den Flüssigkeitstank, eine wirksame Speicherung der Flüssigkeit in dem Flüssigkeitstank und eine wirksame Abführung von Flüssigkeit aus dem Flüssigkeitstank zu dem entsprechenden Flüssigkeitsverbraucher in dem Kraftfahrzeug sichergestellt werden kann. Insbesondere weist die Tankanordnung ferner eine mit dem Flüssigkeitstank fluidtechnisch verbundene Entlüftungsleitung zum Entlüften des Flüssigkeitstanks auf. Durch die Entlüftungsleitung kann beim Zuführen von Flüssigkeit in den Flüssigkeitstank sichergestellt werden, dass die dadurch aus dem Flüssigkeitstank verdrängte Luft wirksam abgeführt werden kann.

Insbesondere weist die Flüssigkeitstankschale des Flüssigkeitstanks eine Zuführöffnung auf, wobei die Zuführöffnung mit der Zuführleitung zum Zuführen von Flüssigkeit in den Innenraum des Flüssigkeitstanks fluidtechnisch verbunden ist. Insbesondere weist die Flüssigkeitstankschale des Flüssigkeitstanks eine Entlüftungsöffnung auf, wobei die Entlüftungsöffnung mit der Entlüftungsleitung zum Entlüften des Innenraums des Flüssigkeitstanks fluidtechnisch verbunden ist. Insbesondere weist die Flüssigkeitstankschale des Flüssigkeitstanks eine Abführöffnung aufweist, wobei die Abführöffnung mit der Abführleitung zum Abführen von Flüssigkeit aus dem Innenraum des Flüssigkeitstanks fluidtechnisch verbunden ist.

Insbesondere weist der Flüssigkeitstank einen Abführstutzen auf, welcher die Abführöffnung aufweist und mit der Abführleitung fluidtechnisch verbunden ist. Insbesondere weist der Flüssigkeitstank einen Zuführstutzen auf, welcher die Zuführöffnung aufweist und mit der Zuführleitung fluidtechnisch verbunden ist. Insbesondere weist der Flüssigkeitstank einen Entlüftungsstutzen auf, welcher die Entlüftungsöffnung aufweist und mit der Entlüftungsleitung fluidtechnisch verbunden ist.

Gemäß einem dritten Aspekt der Erfindung wird die Aufgabe durch ein Verfahren zum Herstellen eines Flüssigkeitstanks gelöst, wobei das Verfahren die folgenden Verfahrensschritte umfasst, Bereitstellen von einem Kunststoff, Bereitstellen von einem antimikrobiellen Wirkstoff, Mischen des Kunststoffs mit dem antimikrobiellen Wirkstoff, Schmelzen der Mischung umfassend den Kunststoff und den antimikrobiellen Wirkstoff, um eine Kunststoffschmelze zu erhalten, und Spritzgießen der Kunststoffschmelze, um einen Flüssigkeitstank mit einer Flüssigkeitstankschale aus Kunststoff zu erhalten, wobei innerhalb des Kunststoffs der antimikrobielle Wirkstoff eingebettet ist.

Dadurch wird beispielsweise der technische Vorteil erreicht, dass in der Kunststoffschmelze eine besonders wirksame Verteilung des antimikrobiellen Wirkstoff innerhalb des Kunststoffs sichergestellt werden, und dass durch das sich anschließende Abkühlen der Kunststoffschmelze während des Spritzgussvorgangs sichergestellt wird, und dass der antimikrobielle Wirkstoff vorteilhaft in dem Kunststoff der geformten Flüssigkeitstankschale eingebettet ist. Durch den Spritzgussvorgang können Flüssigkeitstanks in einer großen Anzahl und mit einem geringen Kostenaufwand hergestellt werden, und zudem kann die Form der Flüssigkeitstanks flexibel gewählt werden.

In einer vorteilhaften Ausführungsform umfasst das Bereitstellen des antimikrobiellen Wirkstoffs, in einem ersten Schritt das Einbringen des antimikrobiellen Wirkstoffs in ein Trägermaterial und in einem sich anschließenden zweiten Schritt das Bereitstellen des Trägermaterials mit dem antimikrobiellen Wirkstoffs, und umfasst das Mischen des Kunststoffs mit dem antimikrobiellen Wirkstoff, das Mischen des Kunststoffs mit dem Trägermaterial, welches den antimikrobiellen Wirkstoffs umfasst.

In einer vorteilhaften Ausführungsform umfasst das Bereitstellen des antimikrobiellen Wirkstoffs, das Bereitstellen einer weiteren Mischung umfassend den antimikrobiellen Wirkstoff und einem weiteren Kunststoff, und umfasst das Mischen des Kunststoffs mit dem antimikrobiellen Wirkstoff, das Mischen des Kunststoffs mit der weiteren Mischung. Dadurch wird beispielsweise der technische Vorteil erreicht, dass durch das Bereitstellen einer weiteren Mischung umfassend den antimikrobiellen Wirkstoff und einem weiteren Kunststoff, ein Vorrat, insbesondere Masterbatch, bereitgestellt werden kann, welcher je nach benötigter Endkonzentration des antimikrobiellen Wirkstoffs in der Flüssigkeitstankschale durch Mischen mit dem Kunststoff verdünnt werden kann. Der Kunststoff und der weitere Kunststoff können hierbei insbesondere denselben Kunststoff oder unterschiedliche Kunststoffe umfassen. Hierbei kann der antimikrobielle Wirkstoff insbesondere das Trägermaterial mit dem antimikrobiellen Wirkstoff umfassen.

Ausführungsbeispiele der Erfindung sind in den Zeichnungen dargestellt und werden im Folgenden näher beschrieben.

Es zeigen:
- Fig. 1: eine schematische Ansicht eines Flüssigkeitstanks mit einer aus Kunststoff geformten Flüssigkeitstankschale gemäß einer ersten Ausführungsform;
- Fig. 2: eine perspektivische Ansicht eines Flüssigkeitstanks mit einer aus Kunststoff geformten Flüssigkeitstankschale gemäß einer zweiten Ausführungsform;
- Fig. 3: eine perspektivische Ansicht einer aus Kunststoff geformten Tankhalbschale eines Flüssigkeitstanks gemäß der zweiten Ausführungsform; und
- Fig. 4: eine schematische Darstellung einer Tankanordnung mit einer Zuführleitung und einer Abführleitung.
- Fig. 5: eine schematische Darstellung eines Verfahrens zum Herstellen eines Flüssigkeitstanks.

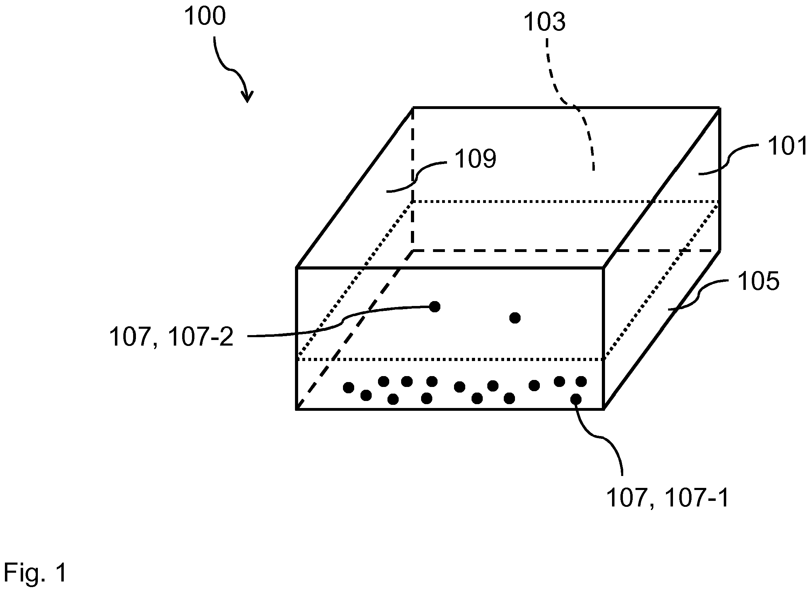

Fig. 1 zeigt eine schematische Ansicht eines Flüssigkeitstanks mit einer aus Kunststoff geformten Flüssigkeitstankschale gemäß einer ersten Ausführungsform. Der Flüssigkeitstank 100 ist insbesondere als ein Wassertank zur Aufnahme von Wasser, insbesondere von destilliertem Wasser, ausgebildet. Der Flüssigkeitstank 100 ist insbesondere als ein Fahrzeugflüssigkeitstank 100 ausgebildet, welcher in einem Kraftfahrzeug angeordnet ist, und welcher insbesondere in einem Wassereinspritzsystem eines Kraftfahrzeugs angeordnet ist. In herkömmlichen Kraftfahrzeugen werden Wassereinspritzsysteme verwendet, um eine Leistungssteigerung von Verbrennungsmotoren zu bewirken, wobei Wasser, insbesondere destilliertes Wasser, in den Ansaugtrakt eines Verbrennungsmotors eingespritzt wird.

In herkömmlichen Wassertanks von Wassereinspritzsystemen tritt oftmals das Problem auf, dass sich ein Biofilm in dem in den Wassertanks aufgenommenem Wasser bilden kann. Ein derartiger Biofilm wird durch Mikroorganismen, wie z.B. Bakterien, Algen, Pilzen oder Protozoen, in dem Wasser gebildet, und kann zu einer Verunreinigung des Wassers führen.

Um das Auftreten eines Biofilms zu verhindern, bzw. die Menge des gebildeten Biofilms zu reduzieren, weist der Flüssigkeitstank 100 gemäß der vorliegenden Offenbarung einen antimikrobiellen Wirkstoff 107 auf, welcher die Vermehrungsfähigkeit von Mikroorganismen beeinträchtigt, bzw. die Mikroorganismen abtötet oder inaktiviert.

Hierzu weist der Flüssigkeitstank 100 eine aus einem Kunststoff geformte Flüssigkeitstankschale 101 auf, welche einen Innenraum 103 des Flüssigkeitstanks 100 zur Aufnahme von Flüssigkeit 105 umschließt.

Innerhalb des Kunststoffs der Flüssigkeitstankschale 101 ist ein antimikrobieller Wirkstoff 107, 107-1 eingebettet, wobei der eingebettete antimikrobielle Wirkstoff 107-1 in der Fig. 1 nur schematisch dargestellt ist. Der Kunststoff der Flüssigkeitstankschale 101 ist durch den antimikrobiellen Wirkstoff 107 durchdringbar. Der Kunststoff der Flüssigkeitstankschale 101 ist hierbei ausgebildet, den eingebetteten antimikrobiellen Wirkstoff 107-1 an die Flüssigkeit 105 in dem Innenraum 103 des Flüssigkeitstanks 100 durch Diffusion abzugeben. Ein an die Flüssigkeit 105 abgegebener antimikrobieller Wirkstoff 107-2 ist in der Fig. 1 nur schematisch dargestellt.

Durch das auf Diffusion basierende Abgeben des antimikrobiellen Wirkstoffs 107 an die Flüssigkeit 105 werden nicht nur an der Flüssigkeitstankschale 101 haftende Mikroorganismen beeinträchtigt, sondern es werden auch in der Flüssigkeit 105 bewegliche Mikroorganismen beeinträchtigt, wodurch das Auftreten eines Biofilms in dem Flüssigkeitstank 100 besonders effektiv verhindert werden kann.

Der Kunststoff der Flüssigkeitstankschale 101 weist hierbei insbesondere kleine Poren und/oder molekulare Zwischenräume auf, durch welche der in dem Kunststoff eingebettete antimikrobielle Wirkstoff 107 im Rahmen eines Diffusionsvorgangs dringen kann, so dass der Kunststoff durch den antimikrobiellen Wirkstoff 107 durchdringbar ist.

Der durchdringbare Kunststoff stellt hierbei sicher, dass der eingebettete antimikrobielle Wirkstoff 107 langsam aus dem Kunststoff in die Flüssigkeit 105 des Flüssigkeitstanks 100 diffundiert.

Hierbei ist der Kunststoff 105 insbesondere ausgebildet, den eingebetteten antimikrobiellen Wirkstoff 107 über einen Zeitraum kontinuierlich an die Flüssigkeit 105 des Flüssigkeitstanks 100 abzugeben. Durch die kontinuierliche Abgabe kann sichergestellt werden, dass stets eine geringe Konzentration von für die Mikroorganismen toxischem Wirkstoff 107 in der Flüssigkeit 105 vorhanden ist. Zudem kann durch die kontinuierliche Abgabe des antimikrobiellen Wirkstoffs 107 eine zu schnelle Abgabe des antimikrobiellen Wirkstoffs 107 an die Flüssigkeit 105 verhindert werden, so dass ein zu schneller Verbrauch des antimikrobiellen Wirkstoffs 107 verhindert werden kann.

Insbesondere weist der Kunststoff hierbei ein Wirkstoffdepot auf, in welchem der eingebettete antimikrobielle Wirkstoff 107-1 aufgenommen ist. Das Wirkstoffdepot stellt hierbei insbesondere eine langanhaltende kontinuierliche Abgabe des antimikrobiellen Wirkstoffs 107 an die Flüssigkeit 105 sicher, so dass die Bildung eines Biofilms in dem Flüssigkeitstank 100 für einen langen Zeitraum, insbesondere für den Betriebszeitraum des Flüssigkeitstanks 100, verhindert werden kann.

Damit der antimikrobielle Wirkstoff 107 besonders wirksam Mikroorganismen in der Flüssigkeit 105 beeinträchtigen kann, muss der antimikrobielle Wirkstoff 107 bereits in geringen Konzentrationen gegenüber Mikroorganismen eine hohe Wirksamkeit aufweisen.

Derartige hochwirksame antimikrobielle Wirkstoffe 107 können einen Feststoff umfassen, insbesondere einen metallischen Feststoff, oder einen Feststoff, welcher Metallatome, Metallmoleküle und/oder Metallionen enthält. Die antimikrobielle Wirksamkeit beruht hierbei insbesondere auf der hohen Toxizität der Metallatome, Metallmoleküle oder Metallionen für eine Vielzahl von Mikroorganismen.

Der antimikrobielle Wirkstoff 107 kann hierbei einen einzigen antimikrobiellen Wirkstoff 107 oder eine Mehrzahl von antimikrobiellen Wirkstoffen 107 umfassen. Zudem kann der zumindest eine antimikrobielle Wirkstoff 107 zumindest einen Hilfsstoff umfassen, z.B. um Diffusionseigenschaften des antimikrobiellen Wirkstoffs 107 zu unterstützen und/oder um die Wirksamkeit des antimikrobiellen Wirkstoffs 107 zu verbessern. Der Hilfsstoff kann insbesondere ein Vitamin, wie z.B. Ascorbinsäure, ein Antioxidans, wie z.B. ein Carotinoid, einen Puffer, wie z.B. Tris(hydroxymethyl)-aminomethan, oder eine biologisch aktive Substanz, wie z.B. ein Enzym und/oder ein Coenzym, umfassen.

Insbesondere umfasst der antimikrobielle Wirkstoff 107 einen anorganischen Feststoff, wobei ein anorganischer Feststoff im Rahmen der vorliegenden Offenbarung insbesondere ein Feststoff ist, welcher keinen Kohlenstoff aufweist. Insbesondere ist der anorganische Feststoff ausgebildet ist, einer Temperatur von mehr als 200 °C, insbesondere von mehr als 300 °C zu widerstehen. Dadurch kann während der Herstellung des Flüssigkeitstanks 100 sichergestellt werden, dass die Wirksamkeit des antimikrobiellen Wirkstoffs 107 in dem Flüssigkeitstank 100 erhalten bleibt.

Insbesondere kann der antimikrobielle Wirkstoff 107 zumindest eines der folgenden Metalle umfassen, Silber, Zink, Osmium, Gold, Ruthenium und Kupfer, und/oder kann der antimikrobielle Wirkstoff 107 zumindest eine der folgenden Verbindungen umfassen, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel. Hierbei weisen Silber-, Kupfer-, und/oder Zink-Nanopartikel insbesondere einen Durchmesser von weniger als 1 µm auf, insbesondere von weniger als 100 nm, insbesondere von weniger als 50 nm, und insbesondere von weniger als 20 nm auf.

Insbesondere ist der antimikrobielle Wirkstoff 107 in einem Trägermaterial eingebettet, wobei das Trägermaterial mit dem antimikrobiellen Wirkstoff 107 innerhalb des Kunststoffs eingebettet ist, wobei das Trägermaterial 107 ausgebildet ist, den in dem Trägermaterial eingebetteten antimikrobiellen Wirkstoff 107 an den Kunststoff abzugeben, wobei der Kunststoff ausgebildet ist, den antimikrobiellen Wirkstoff 107 an die Flüssigkeit 105 in dem Innenraum 103 des Flüssigkeitstanks 100 durch Diffusion abzugeben, und wobei das Trägermaterial insbesondere zumindest eines der folgenden Materialen umfasst, Glas, Molekularsiebe, Zeolithe, und/oder Alumosilicate.

Dadurch wird beispielsweise der technische Vorteil erreicht, dass durch das Trägermaterial, in welchem der antimikrobielle Wirkstoff 107 eingebettet ist, eine wirksame kontrollierte Freisetzung des antimikrobiellen Wirkstoffs 107 sichergestellt werden kann. Durch die kontrollierte Freisetzung kann eine wirksame Depotwirkung des Trägermaterials sichergestellt werden, da verhindert wird, dass der antimikrobielle Wirkstoff 107 sofort in großen Mengen freigesetzt wird und somit eine langanhaltende Freisetzung des antimikrobiellen Wirkstoff 107 sichergestellt wird, wodurch eine wirksame Konzentration des antimikrobiellen Wirkstoffs 107 in der Flüssigkeit 105 während eines längeren Zeitraums sichergestellt wird.

Damit der antimikrobielle Wirkstoff 107 in den Flüssigkeitstank 100 eingebracht werden kann, wird der Kunststoff und der antimikrobielle Wirkstoff 107 bereits bei der Herstellung des Flüssigkeitstanks 100 miteinander vermischt und anschließend aus der Mischung aus Kunststoff und antimikrobiellem Wirkstoff 107 die Flüssigkeitstankschale 101 geformt, insbesondere im Rahmen eines Spritzgussvorganges geformt, so dass die Flüssigkeitstankschale 101 als ein Spritzgussbauteil ausgebildet ist.

Der Kunststoff der Flüssigkeitstankschale 101 umfasst hierbei insbesondere einen einzigen Kunststoff oder eine Mehrzahl von unterschiedlichen Kunststoffen, wie z.B. Polyolefin oder Polyamid, insbesondere Polyethylen, hochdichtes Polyethylen (HDPE) oder Polypropylen. Der Kunststoff der Flüssigkeitstankschale 101 kann insbesondere Ruß umfassen, um wirksame Eigenschaften der Flüssigkeitstankschale 101 sicherzustellen.

Der antimikrobielle Wirkstoff 107 kann hierbei in die gesamte aus Kunststoff geformte Flüssigkeitstankschale 101 eingebettet sein, wodurch sich eine einfache Herstellbarkeit der Flüssigkeitstankschale 101 ergibt. Der antimikrobielle Wirkstoff 107 kann alternativ auch nur in einem Bereich der aus Kunststoff geformten Flüssigkeitstankschale 101 eingebettet sein, wodurch der antimikrobielle Wirkstoff 107 gezielt in dem Bereich oder in den Bereichen der Flüssigkeitstankschale 101 angeordnet werden kann, in welchem oder in welchen mit einem Auftreten von Biofilm unter Umständen zu rechnen ist. Hierbei kann der den antimikrobiellen Wirkstoff 107 umfassende Bereich insbesondere an einer dem Innenraum 103 des Flüssigkeitstanks 100 zugewandten Innenseite 109 der Flüssigkeitstankschale 101 angeordnet sein.

Somit kann durch das Einbetten des antimikrobiellen Wirkstoffs 107 in den Kunststoff der Flüssigkeitstankschale 101 ein ausreichender Vorrat an antimikrobiellem Wirkstoff 107 bereitgestellt werden, welcher durch Diffusion den Kunststoff durchdringen kann und der Flüssigkeit 105 in dem Flüssigkeitstank 100 zugeführt werden kann. Somit können Mikroorganismen in der Flüssigkeit 105 des Flüssigkeitstanks 100 wirksam beeinträchtigt werden, und die Bildung eines Biofilms in dem Flüssigkeitstank 100 kann verhindert werden.

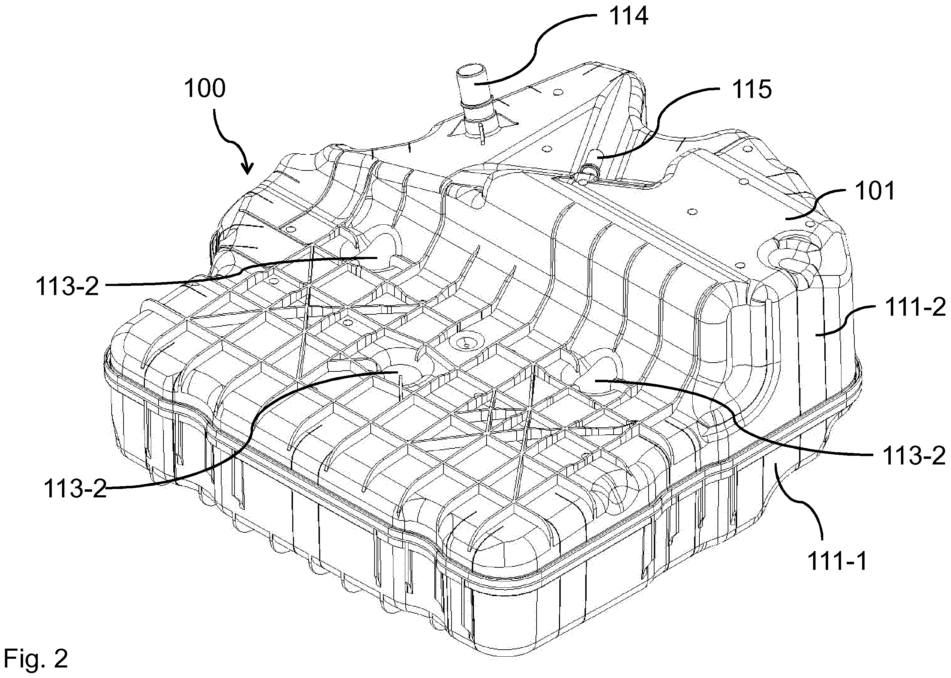

Fig. 2 zeigt eine perspektivische Ansicht eines Flüssigkeitstanks mit einer aus Kunststoff geformten Flüssigkeitstankschale gemäß einer zweiten Ausführungsform. Die Flüssigkeitstankschale 101 des Flüssigkeitstanks 100 gemäß der zweiten Ausführungsform weist einen in Kunststoff eingebetteten antimikrobiellen Wirkstoff 107 auf, welcher durch Diffusion an die Flüssigkeit 105 in dem Flüssigkeitstank 100 abgegeben werden kann. Für Details in Bezug auf den antimikrobiellen Wirkstoff 107 wird auf die Ausführungen zur ersten Ausführungsform in Bezug auf die Fig. 1 verwiesen.

Der in der Fig. 2 dargestellte Flüssigkeitstank 100 gemäß der zweiten Ausführungsform ist ebenso wie die erste Ausführungsform als ein Fahrzeugflüssigkeitstank 100 ausgebildet, welcher in einem Kraftfahrzeug angeordnet ist, und welcher insbesondere in einem Wassereinspritzsystem eines Kraftfahrzeugs angeordnet ist.

Die Flüssigkeitstankschale 101 ist als ein Spritzgussbauteil ausgebildet und weist eine erste, insbesondere untere, Tankhalbschale 111-1 und eine zweite, insbesondere obere, Tankhalbschale 111-2 auf, welche miteinander stoffschlüssig verbunden, insbesondere verschweißt, sind. Die beiden Tankhalbschalen 111-1 und 111-2 begrenzen einen in Fig. 2 nicht einsehbaren Innenraum 103 des Flüssigkeitstanks 100 zu Aufnahme von Flüssigkeit 105.

Um eine stabile Befestigung zwischen den beiden Tankhalbschalen 111-1 und 111-2 sicherzustellen, weist die erste Tankhalbschale 111-1 zumindest ein erstes Befestigungselement 113-1, insbesondere Befestigungsdom, auf, welches sich in den Innenraum 103 des Flüssigkeitstanks 100 erstreckt und weist die zweite Tankhalbschale 111-2 ein zweites Befestigungselement 113-2, insbesondere Befestigungsdom, auf, welches sich in den Innenraum 103 des Flüssigkeitstanks 100 erstreckt, wobei das erste Befestigungselement 113-1 und das zweite Befestigungselement 113-2 miteinander verbunden sind.

In der in Fig. 2 gezeigten Darstellung ist der Innenraum 103 des Flüssigkeitstanks 100 nicht einsehbar und es sind nur Einstülpungen der zweiten Befestigungselemente 113-2 der zweiten Tankhalbschale 111-2 dargestellt.

Die Flüssigkeitstankschale 101, insbesondere die zweite Tankhalbschale 111-2 weist eine Zuführöffnung 114 auf, wobei die Zuführöffnung 114 mit einer Zuführleitung zum Zuführen von Flüssigkeit 105 in den Innenraum 103 des Flüssigkeitstanks 100 fluidtechnisch verbindbar ist.

Die Flüssigkeitstankschale 101, insbesondere die zweite Tankhalbschale 111-2, weist ferner eine Entlüftungsöffnung 115 auf, wobei die Entlüftungsöffnung 115 mit einer Entlüftungsleitung zum Entlüften des Innenraums 103 des Flüssigkeitstanks 100 verbindbar ist.

Die Flüssigkeitstankschale 101, insbesondere die erste Tankhalbschale 111-1, weist ferner eine Abführöffnung 117 auf, wobei die Abführöffnung 117 mit einer Abführleitung zum Abführen von Flüssigkeit 105 aus dem Innenraum 103 des Flüssigkeitstanks 100 verbindbar ist. In der in Fig. 2 dargestellten Ansicht ist die an der ersten Tankhalbschale 111-1 angeordnete Abführöffnung 117 nicht gezeigt.

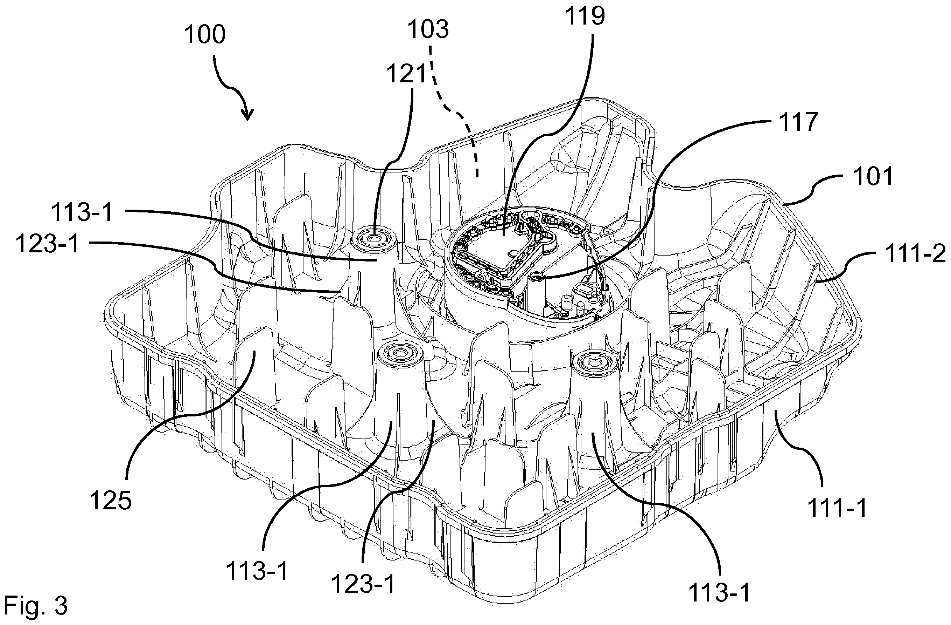

Fig. 3 zeigt eine perspektivische Ansicht einer aus Kunststoff geformten Tankhalbschale eines Flüssigkeitstanks gemäß der zweiten Ausführungsform.

In der Fig. 3 ist nur die erste Tankhalbschale 111-1 des in Fig. 2 dargestellten Flüssigkeitstanks 100 gezeigt. In der in Fig. 3 gezeigten Ansicht ist der Innenraum 103 des Flüssigkeitstanks 100 einsehbar.

In dem Innenraum 103 des Flüssigkeitstanks 100 ist ein Pumpenmodul 119 zum Abpumpen von Flüssigkeit 105 aus dem Flüssigkeitstank 100 angeordnet, wobei an dem Pumpenmodul 119 eine Abführöffnung 117 gezeigt ist, welche mit einer Abführleitung zum Abführen von Flüssigkeit 105 aus dem Innenraum 103 des Flüssigkeitstanks 100 fluidtechnisch verbindbar ist.

Die erste Tankhalbschale 111-1 weist eine Mehrzahl von ersten Befestigungselementen 113-1, insbesondere Befestigungsdome, auf, welches sich in den Innenraum 103 des Flüssigkeitstanks 100 erstrecken. Die ersten Befestigungselemente 113-1 weisen hierbei Kontaktflächen 121 auf, welche mit entsprechenden in Fig. 3 nicht dargestellten Kontaktflächen 121 von zweiten Befestigungselementen 113-2 der zweiten Tankhalbschale 111-2 verbunden werden können, insbesondere verschweißt werden können.

An der ersten Tankhalbschale 111-1 können eine Mehrzahl von ersten Verstärkungsrippen 123-1 angeordnet sein, welche mit den ersten Befestigungselementen 113-1 verbunden sind, und/oder an der zweiten Tankhalbschale 111-2 können eine Mehrzahl von zweiten Verstärkungsrippen 123-2 angeordnet sein, welche mit den in Fig. 3 nicht gezeigten zweiten Befestigungselementen 113-2 verbunden sind.

Auch wenn dies in Fig. 3 nicht dargestellt ist, kann in dem Innenraum 103 des Flüssigkeitstanks 100 ein Heizkörper angeordnet sein, welcher ausgebildet ist die Flüssigkeit 105 in dem Flüssigkeitstank 100 zu erwärmen, wobei der Heizkörper insbesondere ein elektrisches Heizelement zum Erwärmen des Heizkörpers aufweist, und wobei das elektrische Heizelement insbesondere ein elektrisches Widerstandsheizelement, einen PTC-Körper oder eine PTC-Folie umfasst.

Auch wenn dies in Fig. 3 nicht dargestellt ist, kann der Flüssigkeitstank 100 eine Trennwand aufweisen, welche mit der Flüssigkeitstankschale 101 verbunden ist, und den Innenraum 103 des Flüssigkeitstanks 100 in einen ersten Innenraumbereich und in einen zweiten Innenraumbereich unterteilt.

In den Innenraum 103 des Flüssigkeitstanks 100 ist insbesondere zumindest eine Schwallwand 125 angeordnet, wobei die Schallwand 125 ausgebildet ist, eine Flüssigkeitsbewegung der Flüssigkeit 105 in dem Flüssigkeitstank 100 zu hemmen.

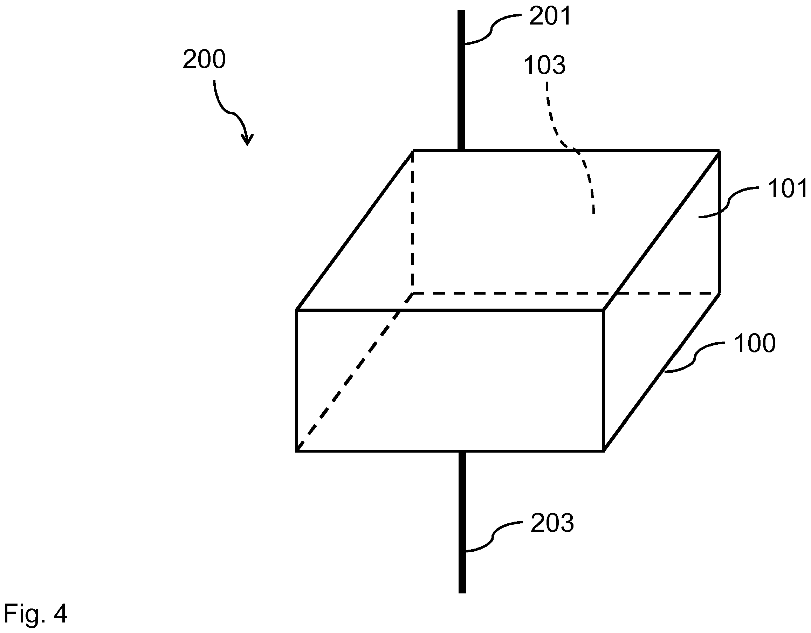

Fig. 4 zeigt eine schematische Darstellung einer Tankanordnung mit einer Zuführleitung und Abführleitung. Die Tankanordnung 200 umfasst einen Flüssigkeitstank 100 gemäß der ersten oder zweiten Ausführungsform, sowie eine mit dem Flüssigkeitstank 100 fluidtechnisch verbundene Abführleitung 203 zum Abführen von Flüssigkeit 105 aus dem Innenraum 103 des Flüssigkeitstanks 100, sowie eine mit dem Flüssigkeitstank 100 fluidtechnisch verbundene Zuführleitung 201 zum Zuführen von Flüssigkeit 105 in den Innenraum 103 des Flüssigkeitstanks 100.

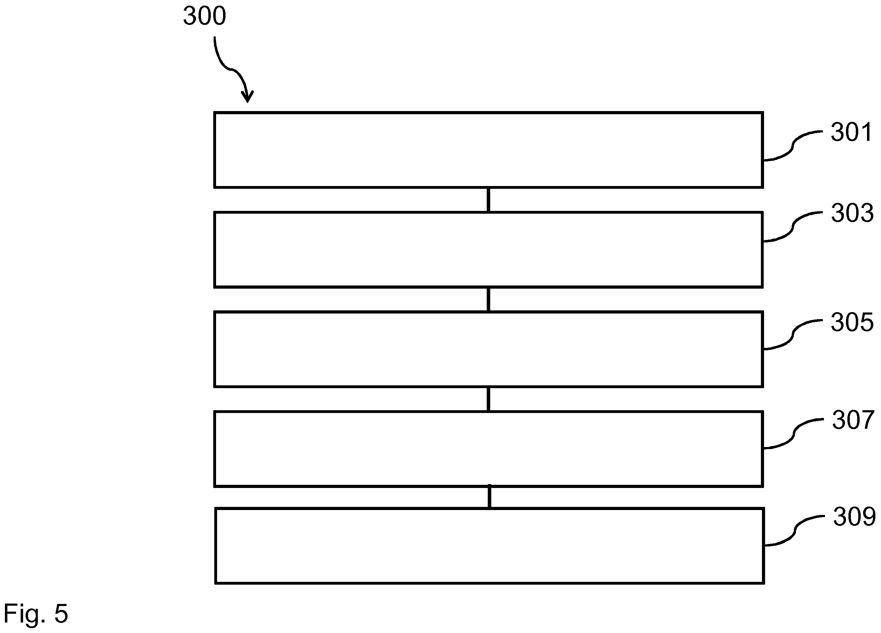

Fig. 5 zeigt eine schematische Darstellung eines Verfahrens zum Herstellen eines Flüssigkeitstanks.

Das Verfahren 300 umfasst als ersten Verfahrensschritt das Bereitstellen 301 von einem Kunststoff. Das Verfahren 300 umfasst als zweiten Verfahrensschritt das Bereitstellen 303 von einem antimikrobiellen Wirkstoff 107. Das Verfahren 300 umfasst als dritten Verfahrensschritt das Mischen 305 des Kunststoffs mit dem antimikrobiellen Wirkstoff 107.

Das Verfahren 300 umfasst als vierten Verfahrensschritt das Schmelzen 307 der Mischung umfassend den Kunststoff und den antimikrobiellen Wirkstoff 107, um eine Kunststoffschmelze zu erhalten. Das Verfahren 300 umfasst als fünften Verfahrensschritt das Spritzgießen 309 der Kunststoffschmelze, um einen Flüssigkeitstank 100 mit einer Flüssigkeitstankschale 101 aus Kunststoff zu erhalten, wobei innerhalb des Kunststoffs der antimikrobielle Wirkstoff 107 eingebettet ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flüssigkeitstank
- 101: Flüssigkeitstankschale
- 103: Innenraum des Flüssigkeitstanks
- 105: Flüssigkeit
- 107: Antimikrobieller Wirkstoff
- 107-1: Eingebetteter antimikrobieller Wirkstoff
- 107-2: An die Flüssigkeit abgegebener antimikrobieller Wirkstoff
- 109: Innenseite der Flüssigkeitstankschale
- 111-1: Erste Tankhalbschale
- 111-2: Zweite Tankhalbschale
- 113-1: Erstes Befestigungselement
- 113-2: Zweites Befestigungselement
- 114: Zuführöffnung
- 115: Entlüftungsöffnung
- 117: Abführöffnung
- 119: Pumpenmodul
- 121: Kontaktfläche
- 123-1: Erste Verstärkungsrippen
- 123-2: Zweite Verstärkungsrippen
- 125: Schwallwand
- 200: Tankanordnung
- 201: Zuführleitung
- 203: Abführleitung
- 300: Verfahren zum Herstellen eines Flüssigkeitstanks
- 301: Verfahrensschritt: Bereitstellen von einem Kunststoff
- 303: Verfahrensschritt: Bereitstellen von einem antimikrobiellen Wirkstoff
- 305: Verfahrensschritt: Mischen des Kunststoffs mit dem antimikrobiellen Wirkstoff
- 307: Verfahrensschritt: Schmelzen der Mischung
- 309: Verfahrensschritt: Spritzgießen der Kunststoffschmelze

## Patentansprüche

1. Flüssigkeitstank (100) zur Aufnahme von Flüssigkeit (105) in einem Kraftfahrzeug, mit:
einer Flüssigkeitstankschale (101), welche einen Innenraum (103) des Flüssigkeitstanks (100) zur Aufnahme von Flüssigkeit (105) umschließt,
wobei die Flüssigkeitstankschale (101) aus einem Kunststoff geformt ist, wobei innerhalb des Kunststoffs ein antimikrobieller Wirkstoff (107) eingebettet ist, wobei der Kunststoff durch den antimikrobiellen Wirkstoff (107) durchdringbar ist; und
wobei der Kunststoff ausgebildet ist, den eingebetteten antimikrobiellen Wirkstoff (107) an eine Flüssigkeit (105) in dem Innenraum (103) des Flüssigkeitstanks (100) durch Diffusion abzugeben, und
wobei der Kunststoff der Flüssigkeitstankschale (101) kleine Poren aufweist, durch welche der in dem Kunststoff eingebettete antimikrobielle Wirkstoff (107) im Rahmen eines Diffusionsvorgangs dringen kann, so dass der Kunststoff durch den antimikrobiellen Wirkstoff (107) durchdringbar ist.

2. Flüssigkeitstank (100) nach Anspruch 1, wobei der antimikrobielle Wirkstoff (107) in die gesamte aus Kunststoff geformte Flüssigkeitstankschale (101) eingebettet ist, oder wobei der antimikrobielle Wirkstoff (107) in einem Bereich der aus Kunststoff geformten Flüssigkeitstankschale (101) eingebettet ist, wobei der Bereich insbesondere eine dem Innenraum (103) des Flüssigkeitstanks (100) zugewandte Innenseite (109) der Flüssigkeitstankschale (101) umfasst.

3. Flüssigkeitstank (100) nach Anspruch 1 oder 2, wobei der Kunststoff ausgebildet ist, den eingebetteten antimikrobiellen Wirkstoff (107) über einen Zeitraum kontinuierlich an die Flüssigkeit (105) in dem Innenraum (103) abzugeben.

4. Flüssigkeitstank (100) nach einem der vorangehenden Ansprüche, wobei der antimikrobielle Wirkstoff (107) einen Feststoff, insbesondere einen metallischen Feststoff oder einen Metallatome, Metallmoleküle und/oder Metallionen enthaltenden Feststoff, umfasst.

5. Flüssigkeitstank (100) nach einem der vorangehenden Ansprüche, wobei der antimikrobielle Wirkstoff (107) einen anorganischen Feststoff umfasst, wobei der anorganische Feststoff insbesondere ausgebildet ist, einer Temperatur von mehr als 200 °C, insbesondere von mehr als 300 °C zu widerstehen.

6. Flüssigkeitstank (100) nach einem der vorangehenden Ansprüche, wobei der antimikrobielle Wirkstoff (107) zumindest eines der folgenden Metalle umfasst, Silber, Zink, Osmium, Gold, Ruthenium und Kupfer, und/oder der antimikrobielle Wirkstoff (107) zumindest eine der folgenden Verbindungen umfasst, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel.

7. Flüssigkeitstank (100) nach einem der vorangehenden Ansprüche, wobei antimikrobielle Wirkstoff (107) in einem Trägermaterial eingebettet ist, wobei das Trägermaterial mit dem antimikrobiellen Wirkstoff (107) innerhalb des Kunststoffs eingebettet ist, wobei das Trägermaterial ausgebildet ist, den in dem Trägermaterial eingebetteten antimikrobiellen Wirkstoff (107) an den Kunststoff abzugeben, wobei der Kunststoff ausgebildet ist, den antimikrobiellen Wirkstoff (107) an die Flüssigkeit (105) in dem Innenraum (103) des Flüssigkeitstanks (100) durch Diffusion abzugeben, und wobei das Trägermaterial insbesondere zumindest eines der folgenden Materialen umfasst, Glas, Molekularsiebe, Zeolithe, und/oder Alumosilicate.

8. Flüssigkeitstank (100) nach einem der vorangehenden Ansprüche, wobei der Kunststoff der Flüssigkeitstankschale (101) zumindest einen der folgenden Kunststoffe umfasst, Polyolefin, insbesondere Polyethylen, hochdichtes Polyethylen (HDPE) oder Polypropylen, oder Polyamid.

9. Flüssigkeitstank (100) nach einem der vorangehenden Ansprüche, wobei die Flüssigkeitstankschale (101) eine erste Tankhalbschale (111-1) und eine zweite Tankhalbschale (111-2) umfasst, welche miteinander stoffschlüssig verbunden, insbesondere verschweißt, sind.

10. Flüssigkeitstank (100) nach Anspruch 9, wobei die erste Tankhalbschale (111-1) ein erstes Befestigungselement (113-1), insbesondere Befestigungsdom, aufweist, welches sich in den Innenraum (103) des Flüssigkeitstanks (100) erstreckt und wobei die zweite Tankhalbschale (111-2) ein zweites Befestigungselement (113-2), insbesondere Befestigungsdom, aufweist, welches sich in den Innenraum (103) des Flüssigkeitstanks (100) erstreckt, wobei das erste Befestigungselement (113-1) und das zweite Befestigungselement (113-2) miteinander verbunden sind.

11. Flüssigkeitstank (100) nach einem der vorangehenden Ansprüche, wobei die Flüssigkeitstankschale (101) eine Zuführöffnung (114) aufweist, wobei die Zuführöffnung (114) mit einer Zuführleitung zum Zuführen von Flüssigkeit (105) in den Innenraum (103) des Flüssigkeitstanks (100) verbindbar ist, und/oder wobei die Flüssigkeitstankschale (101) eine Entlüftungsöffnung (115) aufweist, wobei die Entlüftungsöffnung (115) mit einer Entlüftungsleitung zum Entlüften des Innenraums (103) des Flüssigkeitstanks (100) verbindbar ist, und/oder wobei die Flüssigkeitstankschale (101) eine Abführöffnung (117) aufweist, wobei die Abführöffnung (117) mit einer Abführleitung zum Abführen von Flüssigkeit (105) aus dem Innenraum (103) des Flüssigkeitstanks (100) verbindbar ist.

12. Flüssigkeitstank (100) nach einem der vorangehenden Ansprüche, wobei in dem Innenraum (103) des Flüssigkeitstanks (100) ein Heizkörper angeordnet ist, welcher ausgebildet ist die Flüssigkeit (105) in dem Flüssigkeitstank (100) zu erwärmen, und/oder wobei in dem Innenraum (103) des Flüssigkeitstanks (100) ein Pumpenmodul (119) zum Abpumpen von Flüssigkeit (105) aus dem Flüssigkeitstank (100) angeordnet ist.

13. Flüssigkeitstank (100) nach einem der vorangehenden Ansprüche, wobei der Flüssigkeitstank (100) als ein Fahrzeugflüssigkeitstank (100) ausgebildet ist, welcher in einem Kraftfahrzeug angeordnet ist, und welcher insbesondere in einem Wassereinspritzsystem eines Kraftfahrzeugs angeordnet ist.

14. Tankanordnung (200) mit einem Flüssigkeitstank (100) nach einem der vorangehenden Ansprüche, einer mit dem Flüssigkeitstank (100) fluidtechnisch verbundenen Abführleitung zum Abführen von Flüssigkeit (105) aus dem Innenraum (103) des Flüssigkeitstanks (100), und einer mit dem Flüssigkeitstank (100) fluidtechnisch verbundenen Zuführleitung zum Zuführen von Flüssigkeit (105) in den Innenraum (103) des Flüssigkeitstanks (100).

15. Verfahren (300) zum Herstellen eines Flüssigkeitstanks (100), wobei das Verfahren (300) die folgenden Verfahrensschritte umfasst:
Bereitstellen (301) von einem Kunststoff;
Bereitstellen (303) von einem antimikrobiellen Wirkstoff (107);
Mischen (305) des Kunststoffs mit dem antimikrobiellen Wirkstoff (107);
Schmelzen (307) der Mischung umfassend den Kunststoff und den antimikrobiellen Wirkstoff (107), um eine Kunststoffschmelze zu erhalten; und
Spritzgießen (309) der Kunststoffschmelze, um einen Flüssigkeitstank (100) mit einer Flüssigkeitstankschale (101) aus Kunststoff zu erhalten, wobei innerhalb des Kunststoffs der antimikrobielle Wirkstoff (107) eingebettet ist, wobei der Kunststoff der Flüssigkeitstankschale (101) kleine Poren aufweist, durch welche der in dem Kunststoff eingebettete antimikrobielle Wirkstoff (107) im Rahmen eines Diffusionsvorgangs dringen kann, so dass der Kunststoff durch den antimikrobiellen Wirkstoff (107) durchdringbar ist.

## Claims

1. Liquid tank (100) for holding liquid (105) in a motor vehicle, with:
a liquid tank shell (101), which encloses an interior (103) of the liquid tank (100) for receiving liquid (105),
wherein the liquid tank shell (101) is formed from a plastic, wherein an antimicrobial agent (107) is embedded within the plastic, wherein the plastic is penetrable by the antimicrobial agent (107); and
wherein the plastic is adapted to deliver the embedded antimicrobial agent (107) to a liquid (105) in the interior (103) of the liquid tank (100) by diffusion, and
wherein the plastic of the liquid tank shell (101) has small pores through which the antimicrobial agent (107), which is embedded in the plastic, can penetrate in the course of a diffusion process, so that the plastic is penetrable by the antimicrobial agent (107).

2. Liquid tank (100) according to claim 1, wherein the antimicrobial agent (107) is embedded in the entire plastic tank shell (101), or wherein the antimicrobial agent (107) is embedded in a part of the plastic tank shell (101), wherein the part in particular comprises an inner side (109) of the liquid tank shell (101) facing the interior (103) of the liquid tank (100).

3. Liquid tank (100) according to claim 1 or 2, wherein the plastic is adapted to continuously deliver the embedded antimicrobial agent (107) to the liquid (105) in the interior (103) over a period of time.

4. Liquid tank (100) according to one of the preceding claims, wherein the antimicrobial agent (107) comprises a solid, in particular a metallic solid or a solid containing metal atoms, metal molecules and/or metal ions.

5. Liquid tank (100) according to one of the preceding claims, wherein the antimicrobial agent (107) comprises an inorganic solid, wherein the inorganic solid is in particular adapted to withstand a temperature of more than 200 °C, in particular of more than 300 °C.

6. Liquid tank (100) according to any one of the preceding claims, wherein the antimicrobial agent (107) comprises at least one of the following metals, silver, zinc, osmium, gold, ruthenium and copper, and/or the antimicrobial agent (107) comprises at least one of the following compounds, silver-zinc zeolite, silver phosphate, copper compound, zinc pyrithione, colloidal silver, colloidal copper, colloidal zinc, silver nanoparticles, copper nanoparticles, zinc nanoparticles.

7. Liquid tank (100) according to any one of the preceding claims, wherein antimicrobial agent (107) is embedded in a carrier material, wherein the carrier material with the antimicrobial agent (107) is embedded within the plastic, wherein the carrier material is adapted to deliver the antimicrobial agent (107), which is embedded in the carrier material, to the plastic, wherein the plastic is adapted to deliver the antimicrobial agent (107) to the liquid (105) in the interior (103) of the liquid tank (100) by diffusion, and wherein the carrier material in particular comprises at least one of the following materials, glass, molecular sieves, zeolites, and/or aluminosilicates.

8. Liquid tank (100) according to one of the preceding claims, wherein the plastic of the liquid tank shell (101) comprises at least one of the following plastics, polyolefin, in particular polyethylene, high-density polyethylene (HDPE) or polypropylene, or polyamide.

9. Liquid tank (100) according to any one of the preceding claims, wherein the liquid tank shell (101) comprises a first tank half-shell (111-1) and a second tank half-shell (111-2), which are materially bonded to each other, in particular welded.

10. Liquid tank (100) according to claim 9, wherein the first tank half-shell (111-1) comprises a first fastening element (113-1), in particular fastening dome, which extends into the interior (103) of the liquid tank (100) and wherein the second tank half-shell (111-2) comprises a second fastening element (113-2), in particular fastening dome, which extends into the interior (103) of the liquid tank (100), wherein the first fastening element (113-1) and the second fastening element (113-2) are interconnected.

11. Liquid tank (100) according to one of the preceding claims, wherein the liquid tank shell (101) comprises a feed opening (114), wherein the feed opening (114) is connectable to a feed line for supplying liquid (105) into the interior (103) of the liquid tank (100), and/or wherein the liquid tank shell (101) comprises a ventilation opening (115), wherein the ventilation opening (115) is connectable to a ventilation opening line for venting the interior (103) of the liquid tank (100), and/or wherein the liquid tank shell (101) comprises a discharge opening (117), wherein the discharge opening (117) is connectable to a discharge line for discharging liquid (105) from the interior (103) of the liquid tank (100).

12. Liquid tank (100) according to one of the preceding claims, wherein a heating element is arranged in the interior (103) of the liquid tank (100), which is adapted to heat the liquid (105) in the liquid tank (100), and/or wherein a pump module (119) for pumping liquid (105) out of the liquid tank (100) is arranged in the interior (103) of the liquid tank (100).

13. Liquid tank (100) according to one of the preceding claims, wherein the liquid tank (100) is adapted as a vehicle liquid tank (100), which is arranged in a motor vehicle, and which in particular is arranged in a water injection system of a motor vehicle.

14. Tank arrangement (200) with a liquid tank (100) according to one of the preceding claims, a discharge line, which is fluidically connected to the liquid tank (100), for discharging liquid (105) from the interior (103) of the liquid tank (100), and a supply line, which is fluidically connected to the liquid tank (100) for supplying liquid (105) into the interior (103) of the liquid tank (100).

15. Method (300) for producing a liquid tank (100), the method (300) comprising the following method steps:
providing (301) a plastic;
providing (303) an antimicrobial agent (107);
mixing (305) the plastic with the antimicrobial agent (107);
melting (307) the mixture comprising the plastic and the antimicrobial agent (107) to obtain a plastic melt; and
injection molding (309) the plastic melt in order to obtain a liquid tank (100) with a liquid tank shell (101) made of plastic, wherein the antimicrobial agent (107) is embedded within the plastic, wherein the plastic of the liquid tank shell (101) comprises small pores, through which the antimicrobial agent (107), which is embedded in the plastic, can penetrate in the course of a diffusion process, so that the plastic is penetratable by the antimicrobial agent (107).

## Revendications

1. Réservoir de liquide (100) destiné à recevoir un liquide (105) dans un véhicule automobile, ledit réservoir comprenant :
une coque de réservoir de liquide (101) qui renferme un espace intérieur (103) du réservoir de liquide (100) destiné à recevoir un liquide (105),
la coque de réservoir de liquide (101) étant formée d'une matière synthétique, un agent antimicrobien (107) étant incorporé dans la matière synthétique, la matière synthétique pouvant être pénétrée par l'agent antimicrobien (107) ; et
la matière synthétique étant conçue pour délivrer l'agent antimicrobien incorporé (107) par diffusion à un liquide (105) situé dans l'espace intérieur (103) du réservoir de liquide (100), et
la matière synthétique de la coque de réservoir de liquide (101) comportant de petits pores par lesquels l'agent antimicrobien (107) incorporé dans la matière synthétique peut pénétrer au cours d'un processus de diffusion de sorte que l'agent antimicrobien (107) puisse pénétrer dans la matière synthétique.

2. Réservoir de liquide (100) selon la revendication 1, l'agent antimicrobien (107) étant incorporé dans toute la coque de réservoir de liquide (101) formée de matière synthétique, ou l'agent antimicrobien (107) étant incorporé dans une région de la coque de réservoir de liquide (101) formée de matière synthétique, la région comprenant notamment un côté intérieur (109) de la coque de réservoir de liquide (101) qui est tourné vers l'espace intérieur (103) du réservoir de liquide (100).

3. Réservoir de liquide (100) selon la revendication 1 ou 2, la matière synthétique étant conçue pour délivrer en continu l'agent antimicrobien incorporé (107) au liquide (105) situé dans l'espace intérieur (103) sur une période.

4. Réservoir de liquide (100) selon l'une des revendications précédentes, l'agent antimicrobien (107) comprenant une matière solide, notamment une matière solide métallique ou une matière solide contenant des atomes métalliques, des molécules métalliques et/ou des ions métalliques.

5. Réservoir de liquide (100) selon l'une des revendications précédentes, l'agent antimicrobien (107) comprenant une matière solide minérale, la matière solide minérale étant particulièrement conçue pour résister à une température supérieure à 200 °C, notamment supérieure à 300 °C.

6. Réservoir de liquide (100) selon l'une des revendications précédentes, l'agent antimicrobien (107) comprenant l'un au moins des métaux suivants : l'argent, le zinc, l'osmium, l'or, le ruthénium et le cuivre, et/ou l'agent antimicrobien (107) comprenant l'un au moins des composés suivants : une zéolite dopée à l'argent et au zinc, le phosphate d'argent, un composé du cuivre, le pyrithione de zinc, l'argent colloïdal, le cuivre colloïdal, le zinc colloïdal, les nanoparticules d'argent, les nanoparticules de cuivre, les nanoparticules de zinc.

7. Réservoir de liquide (100) selon l'une des revendications précédentes, l'agent antimicrobien (107) étant incorporé dans un matériau support, le matériau support pourvu de l'agent antimicrobien (107) étant incorporé dans la matière synthétique, le matériau support étant conçu pour délivrer l'agent antimicrobien (107), incorporé dans le matériau support, à la matière synthétique, la matière synthétique étant conçue pour délivrer l'agent antimicrobien (107) par diffusion au liquide (105) situé dans l'espace intérieur (103) du réservoir de liquide (100), et le matériau support comprenant en particulier l'un au moins des matériaux suivants : le verre, des tamis moléculaires, des zéolithes et/ou des aluminosilicates.

8. Réservoir de liquide (100) selon l'une des revendications précédentes, la matière synthétique de la coque de réservoir de liquide (101) comprenant l'une au moins des matières synthétiques suivantes : une polyoléfine, en particulier le polyéthylène, le polyéthylène haute densité (HDPE) ou le polypropylène, ou le polyamide.

9. Réservoir de liquide (100) selon l'une des revendications précédentes, la coque de réservoir de liquide (101) comprenant une première demi-coque de réservoir (111-1) et une deuxième demi-coque de réservoir (111-2), qui sont reliées entre elles par liaison de matière, notamment soudées.

10. Réservoir de liquide (100) selon la revendication 9, la première demi-coquille de réservoir (111-1) comportant un premier élément de fixation (113-1), en particulier un dôme de fixation, qui s'étend jusque dans l'espace intérieur (103) du réservoir de liquide (100) et la deuxième demi-coque de réservoir (111-2) comportant un deuxième élément de fixation (113-2), en particulier un dôme de fixation, qui s'étend jusque dans l'espace intérieur (103) du réservoir de liquide (100), le premier élément de fixation (113-1) et le deuxième élément de fixation (113-2) étant reliés entre eux.

11. Réservoir de liquide (100) selon l'une des revendications précédentes, la coque de réservoir de liquide (101) comportant une ouverture d'alimentation (114), l'ouverture d'alimentation (114) pouvant être reliée à une conduite d'alimentation pour amener du liquide (105) jusque dans l'espace intérieur (103) du réservoir de liquide (100) et/ou la coque de réservoir de liquide (101) comportant une ouverture de ventilation (115), l'ouverture de ventilation (115) pouvant être reliée à une conduite de ventilation pour ventiler l'espace intérieur (103) du réservoir de liquide (100), et/ou la coque de réservoir de liquide (101) comportant une ouverture d'évacuation (117), l'ouverture d'évacuation (117) pouvant être reliée à une conduite d'évacuation pour évacuer le liquide (105) de l'espace intérieur (103) du réservoir de liquide (100) .

12. Réservoir de liquide (100) selon l'une des revendications précédentes, un élément chauffant étant disposé dans l'espace intérieur (103) du réservoir de liquide (100), lequel élément chauffant est conçu pour chauffer le liquide (105) dans le réservoir de liquide (100), et/ou un module de pompe (119) étant disposé dans l'espace intérieur (103) du réservoir de liquide (100) pour pomper du liquide (105) depuis le réservoir de liquide (100).

13. Réservoir de liquide (100) selon l'une des revendications précédentes, le réservoir de liquide (100) étant conçu comme un réservoir de liquide de véhicule (100) qui est disposé dans un véhicule automobile et qui est notamment disposé dans un système d'injection d'eau d'un véhicule automobile.

14. Ensemble de réservoir (200) comprenant un réservoir de liquide (100) selon l'une des revendications précédentes, une conduite d'évacuation reliée au réservoir de liquide (100) de manière fluidique et destinée à évacuer le liquide (105) de l'espace intérieur (103) du réservoir de liquide (100), et une conduite d'alimentation reliée au réservoir de liquide (100) de manière fluidique et destinée à amener du liquide (105) jusque dans l'espace intérieur (103) du réservoir de liquide (100).

15. Procédé (300) de fabrication d'un réservoir de liquide (100), le procédé (300) comprenant les étapes de procédé suivantes :
fournir (301) une matière synthétique ;
fournir (303) un agent antimicrobien (107) ;
mélanger (305) la matière synthétique avec l'agent antimicrobien (107) ;
faire fondre (307) le mélange comprenant la matière synthétique et l'agent antimicrobien (107) pour obtenir une matière synthétique fondue ; et
mouler par injection (309) la matière synthétique fondue afin d'obtenir un réservoir de liquide (100) pourvu d'une coque de réservoir de liquide (101) en matière synthétique, l'agent antimicrobien (107) étant incorporé dans la matière synthétique, la matière synthétique de la coque de réservoir de liquide (101) comportant de petits pores par lesquels l'agent antimicrobien (107) incorporé dans la matière synthétique peut pénétrer au cours d'un processus de diffusion de sorte que l'agent antimicrobien (107) puisse pénétrer dans la matière synthétique.
